# DEMANDE DE BREVET EUROPEEN

(11) **EP 0 906 854 A1**
(43) Date de publication de la demande: **07.04.1999**
(21) Numéro de dépôt: 98402396.0
(22) Date de dépôt: 29.09.1998
(51) Int. Cl.: B60R 16/02

(54) **Système de direction, notamment pour véhicule automobile**

(30) Priorité: 01.10.1997 FR 9712226
(71) Demandeur: ECIA - EQUIPEMENTS ET COMPOSANTS POUR L'INDUSTRIE AUTOMOBILE, F-25400 Audincourt (FR)
(72) Inventeur: Charbon, Antoine, 25200 Montbeliard (FR); Borde, Patrick, 25400 Audincourt (FR)
(74) Mandataire: Habasque, Etienne Joel Jean-François

(57) **Abrégé**

Ce système comportant un ensemble de direction (2) adapté pour recevoir un volant (3) et un premier connecteur (5) raccordé à des composants implantés sur le volant (3), et fixé sur celui-ci, et un second connecteur (8) raccordé au reste des circuits du véhicule, fixé sur l'ensemble par des moyens débrayables et associé à une bobine (9) de conducteurs enroulés, pour permettre la rotation du volant par rapport à l'ensemble de colonne, après enclenchement des connecteurs l'un dans l'autre, est caractérisé en ce que le connecteur (8) associé à la bobine de conducteurs enroulés (9), est relié à une bague de centrage (11) de celui-ci sur l'ensemble, interposée entre cet ensemble et cette bobine et est raccordé aux conducteurs de la bobine (9) par au moins une boucle de conducteurs (13).

## Description

La présente invention concerne un système de direction notamment pour véhicule automobile.

Plus particulièrement, la présente invention concerne un système de direction comportant un ensemble de colonne de direction adapté pour recevoir un volant de direction et des moyens de raccordement électrique de composants implantés sur le volant au reste des circuits du véhicule, comprenant au moins un premier connecteur raccordé aux composants implantés sur le volant et un second connecteur complémentaire raccordé au reste des circuits du véhicule.

On a assisté depuis quelques années à une intégration de plus en plus importante de composants électriques sur les volants de direction des véhicules automobiles et en particulier dans les coussins centraux de ceux-ci.

Ces composants électriques sont par exemple des organes de commande du fonctionnement d'organes fonctionnels du véhicule, ou encore des organes de sécurité, tels que par exemple des modules à sac gonflable.

Ces différents composants doivent alors être raccordés au reste des circuits du véhicule, par l'intermédiaire de connecteurs.

A cet effet, ces différents composants sont reliés par l'intermédiaire de différents conducteurs électriques se présentant par exemple sous la forme d'un câble ou d'une nappe, à un connecteur, ce connecteur étant adapté pour être enclenché dans un connecteur complémentaire également relié par l'intermédiaire par exemple d'un câble ou d'une nappe de conducteurs au reste des circuits du véhicule.

Pour permettre la rotation du volant par rapport à l'ensemble de colonne de direction, une bobine de conducteurs enroulés est implantée entre l'un des câbles et le connecteur correspondant.

On conçoit alors que le montage d'un tel système de direction consiste d'abord pour l'opérateur, à enclencher les connecteurs l'un dans l'autre, puis à monter le volant sur l'ensemble de colonne.

A cet effet, l'opérateur doit saisir les deux connecteurs, les enclencher l'un dans l'autre, puis ranger du mieux qu'il peut les câbles correspondants dans l'ensemble de colonne et/ou le volant afin que ceux-ci d'une part, ne soient pas visibles et d'autre part, ne gênent pas la rotation du volant par rapport à l'ensemble de colonne.

Une fois ces opérations de raccordement électrique terminées, l'opérateur monte alors le volant sur l'ensemble de colonne, en emmanchant par exemple ce volant sur l'arbre de direction de celui-ci, et en le fixant sur celui-ci à l'aide de moyens de serrage ou de moyens de verrouillage à encliquetage par exemple.

On conçoit cependant qu'une telle structure se traduit par un montage relativement difficile du volant sur l'ensemble de colonne.

En effet, les opérations de raccordement électrique et de fixation du volant sur l'ensemble de colonne sont distinctes et doivent être réalisées de manière successive par l'opérateur.

Ceci se traduit par des risques de mauvais enclenchement des connecteurs et une perte de temps relativement importante.

Par ailleurs, les câbles peuvent également être mal rangés, ce qui traduit alors par une dégradation de l'esthétique de la planche de bord et des risques de voir ces câbles gêner la rotation du volant.

Pour résoudre ces problèmes, on connaît du document FR-A-2 737 452, au nom de la Demanderesse, un système de direction de ce type, dans lequel les connecteurs sont fixés l'un sur le volant et l'autre sur l'ensemble de colonne, en regard l'un de l'autre en position de montage du volant sur l'ensemble de colonne, pour permettre leur enclenchement l'un dans l'autre lors de l'emmanchement du volant sur l'ensemble de colonne et dans lequel la fixation de l'un des connecteurs sur l'organe correspondant, ensemble de colonne ou volant, est assurée par des moyens de fixation débrayables et ce connecteur est associé à une bobine de conducteurs enroulés, pour permettre la rotation du volant par rapport à l'ensemble de colonne, après enclenchement des connecteurs.

On conçoit alors que grâce à un tel système, lorsque l'opérateur emmanche le volant sur l'ensemble de colonne, et par exemple sur l'arbre de direction, il enclenche en même temps, les connecteurs l'un dans l'autre pour assurer le raccordement électrique des composants implantés sur le volant au reste des circuits du véhicule.

La fiabilité du raccordement électrique des connecteurs et de la fixation mécanique du volant sur l'arbre de direction est alors assurée par des moyens de verrouillage de type à serrage ou à encliquetage par exemple.

Le but de l'invention est de proposer différents perfectionnements à un tel système.

A cet effet, l'invention a pour objet un système de direction, notamment pour véhicule automobile, du type comportant un ensemble de colonne de direction adapté pour recevoir un volant de direction et des moyens de raccordement électrique de composants implantés sur le volant au reste des circuits du véhicule, comprenant au moins un premier connecteur raccordé aux composants implantés sur le volant, et un second connecteur complémentaire raccordé au reste des circuits du véhicule, ces connecteurs étant fixés l'un sur le volant et l'autre sur l'ensemble de colonne en regard l'un de l'autre en position de montage du volant sur l'ensemble de colonne, pour permettre leur enclenchement l'un dans l'autre lors de l'emmanchement du volant sur l'ensemble de colonne et dans lequel la fixation de l'un des connecteurs sur l'organe correspondant, ensemble de colonne ou volant, est assurée par des moyens de fixation débrayables et ce connecteur est associé à une bobine de conducteurs enroulés, pour permettre la rotation du volant par rapport à l'ensemble de colonne, après enclenchement des connecteurs, caractérisé en ce que le connecteur associé à la bobine de conducteurs enroulés est relié à une bague de centrage de celui-ci sur l'organe correspondant, interposée entre cet organe et cette bobine et est raccordé aux conducteurs de la bobine par au moins une boucle de conducteurs.

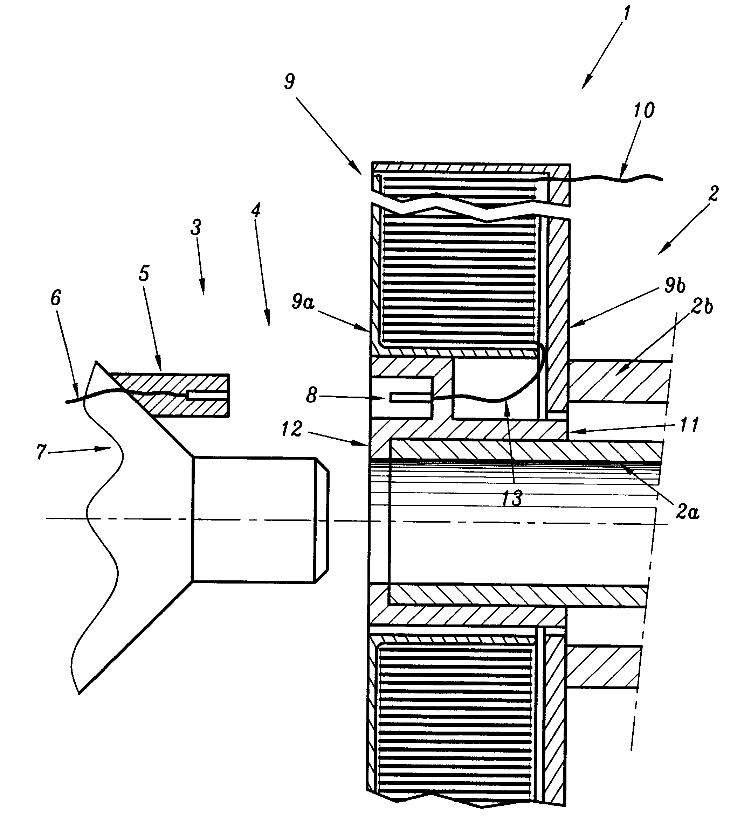

L'invention sera mieux comprise à l'aide de la description qui va suivre, donnée uniquement à titre d'exemple et faite en se référant au dessin annexé qui représente une vue en coupe schématique illustrant la structure d'un exemple de réalisation d'un système de direction selon l'invention.

On reconnaît en effet sur cette figure, un système de direction, notamment pour véhicule automobile, qui est désigné par la référence générale 1.

Ce système de direction comporte un ensemble de colonne de direction désigné par la référence générale 2, comportant un arbre de direction 2a et un corps de colonne 2b et adapté pour recevoir un volant de direction, désigné par la référence générale 3, et des moyens de raccordement électrique de composants implantés sur le volant au reste des circuits du véhicule, ces moyens de raccordement électrique étant désignés par la référence générale 4 sur cette figure.

En fait, ces moyens de raccordement électrique comprennent par exemple au moins un premier connecteur électrique désigné par la référence générale 5, fixé sur le volant et raccordé aux composants implantés sur ce volant, par exemple par l'intermédiaire d'un câble ou d'une nappe de conducteurs, désigné par la référence générale 6, s'étendant dans le reste de la structure du volant 7 et un second connecteur complémentaire désigné par la référence générale 8, porté par l'ensemble de colonne de direction et associé à une bobine de conducteurs enroulés, désignée par la référence générale 9, permettant de raccorder ce connecteur au reste des circuits du véhicule par l'intermédiaire d'un câble ou une nappe de conducteurs 10.

La structure d'une telle bobine de conducteurs enroulés est déjà bien connue dans l'état de la technique et permet un déplacement relatif du volant par rapport à l'ensemble de colonne, par déroulement et enroulement successifs de cette bobine de conducteurs dans un boîtier contenant cette bobine, en fonction de la rotation du volant par rapport au reste de l'ensemble de colonne.

Le boîtier d'une telle bobine comporte en fait deux flasques désignés par les références générales 9a et 9b sur cette figure, dont l'un 9a est mobile en rotation avec l'arbre de direction 2a et dont l'autre 9b est stationnaire par rapport au corps de colonne 2b, ce qui permet les déplacements en rotation du volant de direction par rapport au corps de colonne.

On notera également que dans l'état de la technique, il est prévu des moyens débrayables de maintien en position des deux flasques de ce boîtier tant que le volant n'est pas engagé sur l'ensemble de colonne, ces moyens de maintien étant constitués par exemple par des organes de butée, sollicités élastiquement en position active entre ces deux flasques pour les bloquer et qui sont repoussés par une portion de butée complémentaire du volant par exemple, lorsque celui-ci est emmanché sur l'ensemble de colonne pour, tant que le volant n'est pas emmanché sur l'ensemble, maintenir les deux flasques du boîtier en position relative et dès que le volant est emmanché sur l'ensemble, autoriser une rotation relative des flasques de ce boîtier l'un par rapport à l'autre, afin de suivre les déplacements en rotation du volant.

Selon l'invention, le second connecteur 8 associé à la bobine de conducteurs enroulés 9 et donc à l'ensemble de colonne de direction, dans l'exemple illustré, est relié à une bague de centrage 11 de celui-ci sur l'organe correspondant du système de direction, c'est-à-dire en fait sur cet ensemble de colonne de direction et plus particulièrement sur l'arbre de direction 2a de celui-ci, dans l'exemple illustré.

A cet effet, le connecteur 8 peut être venu de matière avec cette bague 11, cette bague comportant par exemple à l'une de ses extrémités, des moyens de butée axiale 12 adaptés pour coopérer avec l'arbre pour garantir un centrage en position axiale correcte de ce second connecteur sur cet arbre de direction.

Il est à noter que cette bague de centrage 11 est interposée entre l'organe correspondant, c'est-à-dire en fait l'arbre de direction 2a et la bobine de conducteurs enroulés 9 et que le connecteur 8 est raccordé aux conducteurs de cette bobine 9 par au moins une boucle de conducteurs, désignée par la référence générale 13 sur cette figure.

L'arbre de direction, la bague de centrage et le flasque correspondant du boîtier de la bobine comportent des moyens complémentaires d'entraînement en rotation, de type classique par exemple par effet de forme et le boîtier de la bobine peut être monté déplaçable axialement et éventuellement avec un léger jeu angulaire, par rapport à la bague pour autoriser un rattrapage des jeux de montage comme cela sera décrit plus en détail par la suite.

Dans l'exemple qui a été décrit, le second connecteur 8 est venu de matière avec cette bague 11, mais il va de soi bien entendu que d'autres modes de réalisation peuvent être envisagés.

L'utilisation de la bague de centrage 11 pour placer le second connecteur 8 en position de centrage correcte par rapport à l'arbre de direction 2a permet de faciliter l'enclenchement des connecteurs 5,8 lors de la phase de montage du volant 3 sur l'ensemble de colonne 2 en établissant des références de position de ces connecteurs par rapport à l'arbre de direction.

Le montage à déplacement axial de la bobine sur la bague associé à l'utilisation d'une boucle de conducteurs permettant de raccorder le connecteur à la bobine de conducteurs enroulés, autorisent un rattrapage des défauts d'alignement éventuels de la bobine de conducteurs enroulés par rapport aux connecteurs et d'éviter les défauts de raccordement pouvant en résulter lors de l'emmanchement du volant sur l'ensemble de colonne.

Il va de soi bien entendu que différents modes de réalisation de ce système peuvent être envisagés.

C'est ainsi par exemple que la bobine de conducteurs enroulés peut être associée au connecteur fixé sur le volant de direction, ce connecteur étant alors relié à une bague de centrage de celui-ci sur le volant.

## Revendications

1. Système de direction, notamment pour véhicule automobile, du type comportant un ensemble de colonne de direction (2) adapté pour recevoir un volant de direction (3) et des moyens (4) de raccordement électrique de composants implantés sur le volant au reste des circuits du véhicule, comprenant au moins un premier connecteur (5) raccordé aux composants implantés sur le volant (3), et un second connecteur complémentaire (8) raccordé au reste des circuits du véhicule, ces connecteurs (5,8) étant fixés l'un (5) sur le volant et l'autre (8) sur l'ensemble de colonne (2), en regard l'un de l'autre en position de montage du volant sur l'ensemble de colonne, pour permettre leur enclenchement l'un dans l'autre lors de l'emmanchement du volant sur l'ensemble de colonne et dans lequel la fixation de l'un des connecteurs (8) sur l'organe correspondant, ensemble de colonne ou volant, est assurée par des moyens de fixation débrayables et ce connecteur (8) est associé à une bobine de conducteurs enroulés (9), pour permettre la rotation du volant par rapport à l'ensemble de colonne, après enclenchement des connecteurs, caractérisé en ce que le connecteur (8) associé à la bobine de conducteurs enroulés (9) est relié à une bague de centrage (11) de celui-ci sur l'organe correspondant, interposée entre cet organe et cette bobine et est raccordé aux conducteurs de la bobine (9) par au moins une boucle de conducteurs (13).

2. Système selon la revendication 1, caractérisé en ce que l'organe correspondant est un arbre de direction (2a) de l'ensemble de colonne de direction.

3. Système selon la revendication 1 ou 2, caractérisé en ce que le second connecteur (8) est venu de matière avec la bague de centrage (11).

4. Système selon l'une quelconque des revendications précédentes, caractérisé en ce que la bague comporte des moyens de centrage (12) en position axiale sur l'organe correspondant.

5. Système selon l'une quelconque des revendications précédentes, caractérisé en ce que la bobine (9) est déplaçable axialement par rapport à la bague de centrage (11).
